# EUROPÄISCHE PATENTANMELDUNG

(11) **EP 2 962 960 A1**
(43) Veröffentlichungstag der Anmeldung: **06.01.2016**
(21) Anmeldenummer: 15001338.1
(22) Anmeldetag: 06.05.2015
(51) Int. Cl.: B65G 1/02, A47B 47/04

(54) **HOCHREGAL FÜR EIN HOCHREGALLAGER**

(30) Priorität: 30.06.2014 AT 5172014
(71) Anmelder: Kaufmann Bausysteme GmbH, 6870 Reuthe (AT)
(72) Erfinder: Kaufmann, Anton, 6870 Reuthe (AT)
(74) Vertreter: Fechner, Thomas

(57) **Zusammenfassung**

Hochregal (1) für ein Hochregallager (2), insbesondere zur Lagerung einer Vielzahl von Kleinteilen, wobei das Hochregal (1) vertikal stehende Steher (3) und die Steher (3) in Horizontalrichtung (4) miteinander verbindende Längsträger (5) aufweist, wobei in den Stehern (3), vorzugsweise umfangsgeschlossene, Ausnehmungen (6) angeordnet sind und jeweils einer der Längsträger (5) durch jeweils eine der Ausnehmungen (6) in jeweils einem der Steher (3) hindurchgeführt ist und zumindest ein Wandabschnitt (7) des jeweiligen Stehers (3), welcher die jeweilige Ausnehmung (6) begrenzt, in zumindest eine Nut (8) im Längsträger (5) eingreift. (Fig. 2)

## Beschreibung

Die vorliegende Erfindung betrifft ein Hochregal für ein Hochregallager, insbesondere zur Lagerung einer Vielzahl von Kleinteilen, wobei das Hochregal vertikal stehende Steher und die Steher in Horizontalrichtung miteinander verbindende Längsträger aufweist. Weiters betrifft die Erfindung auch ein Hochregallager mit einer Vielzahl von Hochregalen, sowie ein Verfahren zur Montage eines Hochregals.

Als Hochregallager werden beim Stand der Technik Lager mit Hochregalen bezeichnet, bei denen die Hochregale in Vertikalrichtung die normale Raumhöhe deutlich übersteigen. Heutzutage werden bei Hochregallagern Maximalhöhen bis ca. 50m erreicht. Hochregallager mit mehreren tausend Palettenstellplätzen sind beim Stand der Technik ebenso bekannt wie Hochregallager zur Lagerung von Kleinteilen. Hochregallager stellen Lagersysteme dar, welche einerseits einen hohen Grad der Raumnutzung realisieren und andererseits aber auch mit nicht zu verachtenden Investitionskosten verbunden sind. Meist werden Hochregallager mit einem vollautomatisierten System zur Lagerverwaltung bewirtschaftet. Die Waren können innerhalb des Hochregallagers von Regalbediengeräten und/oder auch Gabelstaplern befördert werden.

Hochregallager werden heutzutage überwiegend als Stahlkonstruktionen errichtet. Es gibt aber zur Lagerung von Paletten bereits auch einzelne Hochregallager mit Hochregalen aus Holz.

Aufgabe der Erfindung ist es eine neue Art eines Hochregals für ein Hochregallager vorzuschlagen, welche kostengünstig herzustellen und zusammenzubauen ist. Erfindungsgemäß wird hierzu vorgeschlagen, dass in den Stehern, vorzugsweise umfangsgeschlossene, Ausnehmungen angeordnet sind und jeweils einer der Längsträger durch jeweils eine der Ausnehmungen in jeweils einem der Steher hindurchgeführt ist und zumindest ein Wandabschnitt des jeweiligen Stehers, welcher die jeweilige Ausnehmung begrenzt, in zumindest eine Nut im Längsträger eingreift.

Es ist somit ein gegenseitiges Ineinandergreifen von Längsträger und Steher vorgesehen, indem einerseits jeweils einer der Längsträger durch jeweils eine der Ausnehmungen in dem Steher hindurchgeführt ist und andererseits zumindest ein Wandabschnitt eines jeweiligen Stehers im zusammengebauten Zustand in zumindest eine Nut im Längsträger eingreift. Hierdurch ist eine einfach zusammenbaubare aber sehr stabile Konstruktion geschaffen, mit der Hochregale kostengünstig hergestellt und zusammengebaut werden können, zumal die Formgebung der Steher und der Längsträger hierzu sehr einfach gestaltet und damit auch kostengünstig herstellbar ist.

Ein bevorzugtes Verfahren zur Montage eines solchen erfindungsgemäßen Hochregals sieht vor, dass der jeweilige Längsträger durch die jeweilige Ausnehmung in dem jeweiligen Steher hindurchgeführt wird und mittels Drehen oder Kippen des Längsträgers um eine Längsachse des Längsträgers der zumindest eine Wandabschnitt des Stehers, welcher diese Ausnehmung begrenzt, in die zumindest eine Nut im Längsträger eingeführt wird. In einer ersten Gruppe von Ausgestaltungsformen von erfindungsgemäßen Hochregalen wird auf zusätzliche Verbindungsmittel zwischen Längsträger und Steher wie z.B. Verschraubung oder zusätzliche Verstrebungen verzichtet. Es ist aber auch möglich, die Längsträger und die Steher durch zusätzliche mechanische Verbindungsmittel wie z.B. Verschraubung an einander zusätzlich in ihrer Lage zu sichern.

Die Längsträger verlaufen jeweils in einer entsprechenden Seitenansicht gesehen günstigerweise orthogonal zu den Stehern. Die Steher werden bevorzugt in Längsrichtung des Hochregals voneinander beabstandet mittels der Längsträger miteinander verbunden. Die Steher sind bevorzugt plattenförmig ausgebildet. Es kann sich dabei um einstückige aber auch um zusammengesetzte Platten handeln. Bevorzugt ist vorgesehen, dass der Längsträger zumindest zwei einander gegenüberliegende Nuten aufweist, in die jeweils ein Wandabschnitt des jeweiligen Stehers, welcher die jeweilige Ausnehmung begrenzt, eingreift. Die Nuten sind günstigerweise bezüglich einer Längsachse des Längsträgers achsensymmetrisch zueinander, bevorzugt paarweise einander gegenüberliegend im Längsträger angeordnet. Die Längsträger sind bevorzugt brett- oder plattenförmig ausgebildet. Die Nut bzw. die Nuten befinden sich bevorzugt in einem Randbereich 31 des Längsträgers, besonders bevorzugt entlang dessen Längsseiten. Sowohl bei plattenförmig als auch bei brettförmig ausgestalteten Körpern gilt, dass deren Länge größer als deren Breite und meist deutlich größer als deren Dicke ist. Bei einer brettförmigen Ausgestaltung beträgt die Breite günstigerweise zumindest 5 mal die Dicke, vorzugsweise zumindest 10 mal die Dicke. Bei einer plattenförmigen Ausgestaltung ist die Breite in der Regel größer. Hier beträgt die Breite günstigerweise zumindest das 20-fache der Dicke.

Die Ausnehmungen in den Stehern sind bevorzugt umfangsgeschlossen ausgebildet. Hiervon spricht man, wenn die Ausnehmungen in den Stehern, in einer Seitenansicht auf die Steher gesehen, eine rundum von Wandabschnitten der Steher begrenzte Durchgangsöffnung bilden. Besonders bevorzugt sind die Ausnehmungen in den Stehern mittig angeordnet. Es kann sich z.B. um eine achsensymmetrische Anordnung der Ausnehmungen in den Stehern bezüglich einer Längsmittelachse der Steher handeln. Die Ausnehmung in den Stehern müssen natürlich zumindest so groß sein, dass zumindest ein Längsträger durch sie hindurchgeführt werden kann.

Wie eingangs bereits erwähnt, werden erfindungsgemäße Hochregale besonders bevorzugt zur Lagerung einer Vielzahl von Kleinteilen verwendet. Die Kleinteile werden in solchen Hochregalen bevorzugt in Wannen gelagert. Besonders bevorzugte Varianten erfindungsgemäßer Hochregale sehen vor, dass an den Stehern Lagerschienen zur Aufnahme von Wannen für Kleinteile oder andere Gegenstände angeordnet sind. Die Wannen können auf den Lagerschienen bevorzugt verschoben werden. Es kann sich um Gleitflächen aber auch um Rollenlager oder dergleichen handeln. Unter einer Wanne ist jegliches Behältnis zu verstehen, welches zur Aufnahme von Kleinteilen geeignet ist. Der Begriff der Wanne umfasst in diesem Sinne also auch Kisten, Boxen und dergleichen. Günstigerweise haben die Wannen einen rechteckigen Grundriss. Bevorzugt weisen die Wannen auch mehr oder weniger hohe Seitenwände auf. Bei den Kleinteilen handelt es sich bevorzugt um Massengut bzw. Schüttgut. Natürlich können erfindungsgemäße Hochregale aber auch zu anderen Zwecken und nicht nur zur Lagerung von Kleinteilen verwendet werden.

Auch wenn erfindungsgemäße Hochregale aus anderen Materialien ausgebildet sein können, sehen bevorzugte Varianten der Erfindung vor, dass die Längsträger und/oder die Steher aus Holz und/oder Holz-Verbundwerkstoff, vorzugsweise aus Buchenfurnierschichtholz oder anderem Schichtholz, bestehen oder dieses zumindest aufweisen. Bei den Holzverbundwerkstoffen handelt es sich besonders bevorzugt um Schichthölzer, bei denen einzelne Holzschichten miteinander verleimt oder verklebt sind. Solche Schichthölzer können so aufgebaut sein, dass die Fasern in allen miteinander verleimten Schichten im Wesentlichen parallel zueinander laufen. Es können aber auch Schichten mit quer verlaufen Fasern mit eingelegt sein. In diesen Schichten sind die Fasern dann bevorzugt orthogonal bzw. zumindest quer zu den Fasern in anderen Schichten des Furnierschichtholzes ausgerichtet. Dies ist an sich bekannt. Besonders bevorzugt ist vorgesehen, dass die Steher und/oder die Längsträger aus Buchenfurnierschichtholz bestehen oder dieses zumindest aufweisen. Hiermit können besonders hohe Festigkeiten mit relativ geringem Materialaufwand realisiert werden. Sowohl Steher als auch Längsträger können z.B. aber auch aus 3-Schichtplatten, OSB- (oriental strand board) Platten oder anderen Spanplatten hergestellt sein.

Der Vollständigkeit halber wird darauf hingewiesen, dass unter Holz im Wesentlichen Massivholz zu verstehen ist, welches direkt aus dem Baum bzw. Stamm herausgesägt wird. Holzverbundwerkstoffe sind aus oder zumindest unter Verwendung von Holz hergestellte Verbundkörper. Es kann sich dabei um die bereits genannten Schichthölzer, aber auch um andere Verbundwerkstoffe, auch unter Einbeziehung anderer Werkstoffe als Holz, handeln. Als Beispiele für die genannten anderen Werkstoffe sind Leim, Kleber und/oder auch Armierungen z.B. aus Faserwerkstoffen, Metall und/oder Kunststoff zu nennen. Der Holzanteil der Holzverbundwerkstoffe beträgt aber günstigerweise zumindest 90%, vorzugsweise zumindest 95%, Gewichtsanteil.

Da es sich bei den erfindungsgemäßen Regalen nicht um beliebige Regale sondern um Hochregale handelt, ist günstigerweise vorgesehen, dass die Steher, vorzugsweise die Stützen der Steher, eine vertikale Erstreckung von zumindest 6 m, vorzugsweise von zumindest 12 m, aufweisen.

Neben dem Hochregal an sich betrifft die Erfindung, wie eingangs bereits angedeutet, auch ein Hochregallager mit einer Vielzahl von Hochregalen gemäß der Erfindung. Die Hochregale sind in dem Hochregallager bevorzugt so angeordnet, dass ihre Längsträger parallel zueinander verlaufen. Zwischen den Hochregalen sind bevorzugt Gassen angeordnet. Diese Gassen sind vorzugsweise mittels Förderanlagen und/oder Gabelstaplern befahrbar, um die Wannen und/oder sonstigen Gegenstände in das jeweilige Hochregal einsortieren und aus diesem auch wieder entnehmen zu können. Erfindungsgemäße Hochregallager sind in bevorzugten Ausgestaltungsformen als selbststehendes Gebäude ausgeführt. In diesem Zusammenhang ist bevorzugt vorgesehen, dass das Hochregallager ein Gebäude ist, bei dem ein Dach des Gebäudes und/oder Außenwände des Gebäudes von den Hochregalen des Hochregallagers getragen ist, bzw. sind. In diesen Ausgestaltungsformen nehmen die erfindungsgemäß ausgebildeten Steher der Hochregale also nicht nur die Lasten der sich im Hochregal befindlichen Wannen und/oder anderen Gegenstände sondern auch die Dachlast und die Last der Außenwände sowie gegebenenfalls auftretende witterungsbedingte Zusatzlasten z.B. durch Wind, Regen und/oder Schnee auf.

Weitere Merkmale und Einzelheiten bevorzugter Ausgestaltungsformen der Erfindung werden nachfolgend anhand von ausgewählten Ausführungsbeispielen erläutert. Es handelt sich um schematisierte Darstellungen, welche Folgendes zeigen:
Fig. 1 ein in Form eines Gebäudes ausgebildetes Hochregallager gemäß der Erfindung, wobei die Außenwände und das Dach nur teilweise dargestellt sind;
Fig. 2 einige Hochregale des erfindungsgemäßen Hochregallagers gemäß Fig. 1;
Fig. 3 eine Detaildarstellung des Ausschnittes A aus Fig. 2;
Fig. 4 eine Frontalansicht auf vier nebeneinander angeordnete Hochregale;
Fig. 5 eine detaillierte Ansicht auf zwei benachbarte Steher zweier benachbarter Hochregale, wobei die dazwischenliegende Gasse verengt dargestellt ist;
Fig. 6 eine Draufsicht auf einen Längsträger der bisher gezeigten Hochregale;
Fig. 7 ein Beispiel einer für die Lagerung von Kleinteilen in den gezeigten Hochregalen geeigneten Wanne;
Fig. 8 bis 13 Detaildarstellung zur Anbringung von Lagerschienen an den Stehern und
Fig. 14 eine Darstellung zur Erläuterung der Montage des Hochregals durch Verbinden der Längsträger mit den Stehern.

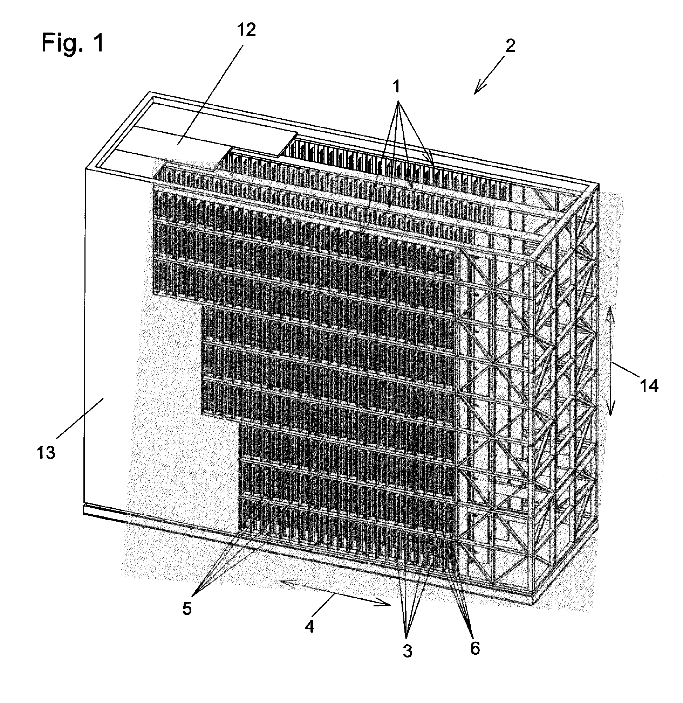

Fig. 1 zeigt schematisiert ein erfindungsgemäßes Hochregallager 2, welches in Form eines selbststehenden Gebäudes ausgebildet ist. Das Dach 12 und gegebenenfalls auch die Außenwände 13 werden von den Stehern 3 der erfindungsgemäßen Hochregale 1 getragen. Die Steher 3 eines Hochregals 1 sind mittels der Längsträger 5 miteinander verbunden. Der Vollständigkeit halber wird darauf hingewiesen, dass erfindungsgemäße Hochregallager 2 nicht immer zwangsweise als ein selbststehendes Gebäude ausgebildet sein müssen. Es kann sich auch um Hochregallager 2 oder einzelne Hochregale 1 handeln, welche in ein bestehendes Gebäude eingebaut werden. Im zuletzt genannten Fall tragen die Steher 3 in der Regel dann abweichend vom hier gezeigten Ausführungsbeispiel weder das Dach 12 noch die Außenwände 13. Die Hochregale 1 erstrecken sich in Horizontalrichtung 4 entlang der Längsträger 5. Die Steher 3 der Hochregale 1 erstrecken sich in Vertikalrichtung 14. Von der Erstreckung in der exakten Horizontalrichtung bzw. der exakten Vertikalrichtung sind natürlich auch Abweichungen denkbar.

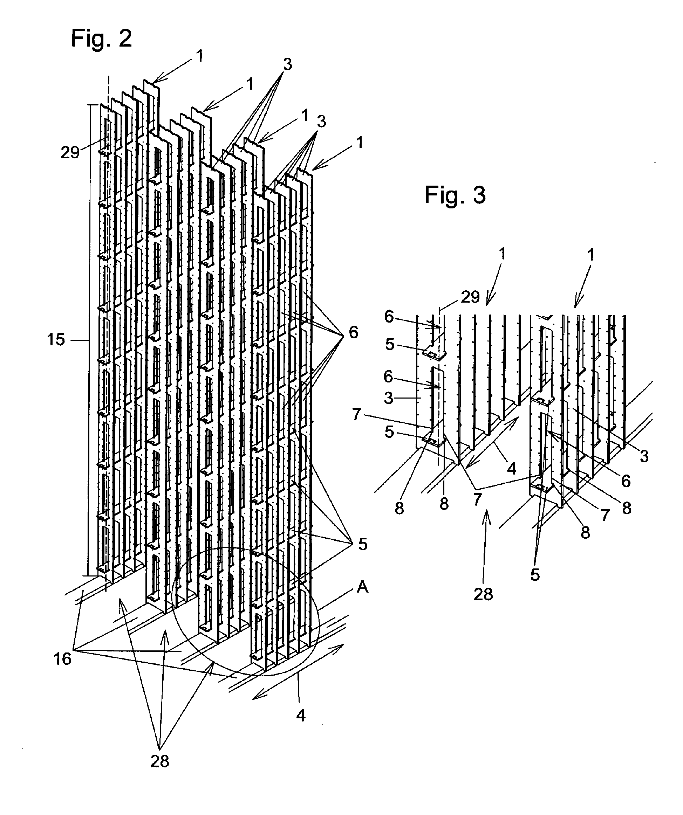

Fig. 2 zeigt eine perspektivische Ansicht auf einen Abschnitt von vier parallel verlaufend zueinander angeordneten Hochregalen 1, wie sie im Hochregallager 2 gemäß Fig. 1 zum Einsatz kommen. Zwischen den Hochregalen 1 befindet sich jeweils eine Gasse 28. Die Gassen 28 sind günstigerweise mittels hier nicht dargestellten, aber an sich bekannten Förderanlagen und/oder Gabelstaplern befahrbar, um die in Fig. 2 nicht dargestellten Wannen und/oder sonstigen Gegenstände in das jeweilige Hochregal 1 einzusortieren und/oder aus diesem zu entnehmen. Bei bevorzugten Ausgestaltungsformen wie der hier gezeigten, lagern die Steher 3 nicht direkt auf dem Boden sondern jeweils auf einer Vorlegeschwelle 16. In die Steher 3 und/oder die Vorlegeschwelle 16 können Nuten eingearbeitet sein, die eine formschlüssige Verbindung der Steher 3 mit den Vorlegeschwellen 16 gewährleisten.

Die einzelnen Steher 3 weisen in diesem Ausführungsbeispiel eine Vielzahl von übereinander angeordneten Ausnehmungen 6 auf. Alle Ausnehmungen 6 sind umfangsgeschlossen, also abgesehen von der Durchtrittsöffnung rundum von Wandabschnitten 7 eingeschlossen. Durch die Ausnehmungen 6 sind die Längsträger 5 hindurchgeführt. Zusätzlich greifen zwei einander gegenüberliegende, die jeweilige Ausnehmung 6 begrenzende Wandabschnitte 7 des jeweiligen Stehers in zwei einander gegenüberliegende Nuten 8 des jeweiligen Längsträgers 5 ein. Durch diese formschlüssige Verbindung zwischen den Längsträgern 5 und den Stehern 3 wird eine tragende Verbindung zwischen den Stehern 3 und den Längsträgern 5 geschaffen, welche eine ausreichende Stabilität aufweist, um das gesamte Hochregal 1 ausreichend stabil auszugestalten. Die Vertikalerstreckung 14 der Steher 3 und damit des Hochregals 1 beträgt günstigerweise zumindest 6m, vorzugweise zumindest 12m.

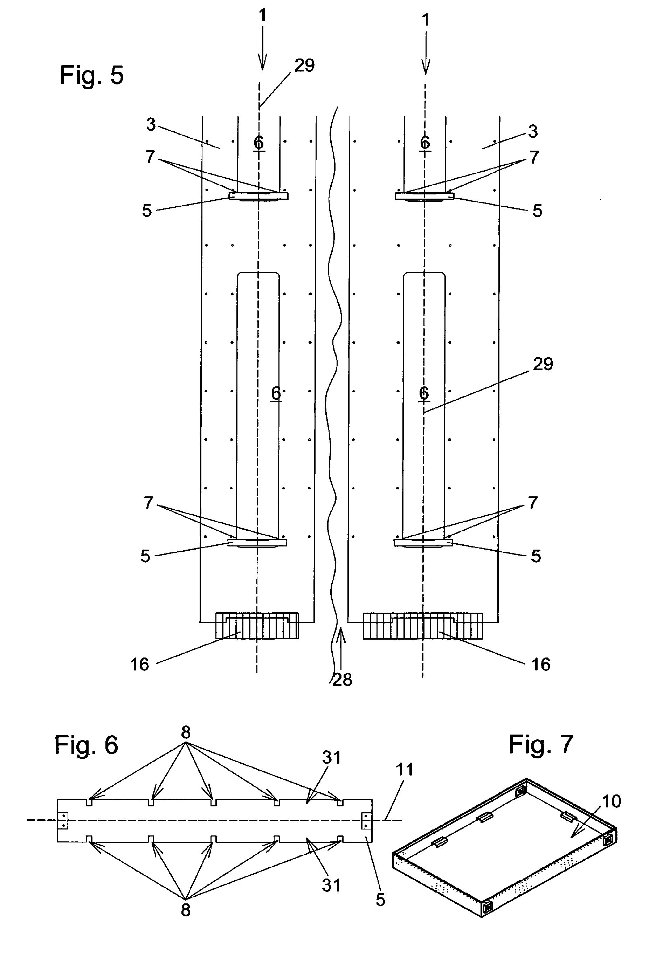

Fig. 3 zeigt das Detail A aus Fig. 2. Hier ist der formschlüssige Eingriff zwischen Steher 3 und Längsträger 5 besonders gut zu sehen. Im gezeigten Ausführungsbeispiel sind die Steher 3 plattenförmig ausgebildet. Die Ausnehmungen 6 befinden sich jeweils mittig in dem jeweiligen Steher 3. Sie sind symmetrisch bezüglich der Mittellängsachse 29 des jeweiligen Stehers 3. Fig. 5 zeigt all dies noch einmal in einer Seitenansicht auf einen unteren Teil der jeweiligen Steher 3, wobei die Gasse 28 in Fig. 5 in ihrer Breite verkürzt dargestellt ist. In Fig. 5 ist auf der linken Seite ein etwas schmäleres Wandregal und auf der rechten Seite ein etwas breiteres, in der Mitte des Hochregallagers 2 angeordnetes Hochregal 1 gezeigt. Die Breite, Dicke und Länge der Steher kann natürlich an die jeweilige Aufgabenstellung angepasst werden, genauso wie die Dimensionen der Längsträger 5. In Fig. 6 ist ein Längsträger 5, wie er in den hier gezeigten Beispielen verwendet wird, verkleinert dargestellt. Gut zu sehen sind die Nuten 8, in die im zusammengebauten Zustand die Wandabschnitte 7, welche die Ausnehmungen 6 der Steher 3 begrenzen, eingreifen. Die Nuten 8 sind, wie in Fig. 6 gut zu erkennen, paarweise gegenüberliegend bzw. achsensymmetrisch zur Längsachse 11 des Längsträgers 5 angeordnet. Der Längsträger 5 dieses Ausführungsbeispiels ist, wie in Fig. 6 gut zu erkennen ist, brettförmig ausgebildet.

Fig. 7 zeigt ein Beispiel einer Wanne 10, wie sie im gezeigten Ausführungsbeispiel zum Einsatz kommen kann, um Kleinteile im Hochregal 1 zu lagern. Wie bereits eingangs ausgeführt, können diese Wannen natürlich auch höhere Seitenwände aufweisen oder in anderer Art und Weise box- oder kistenförmig ausgebildet sein.

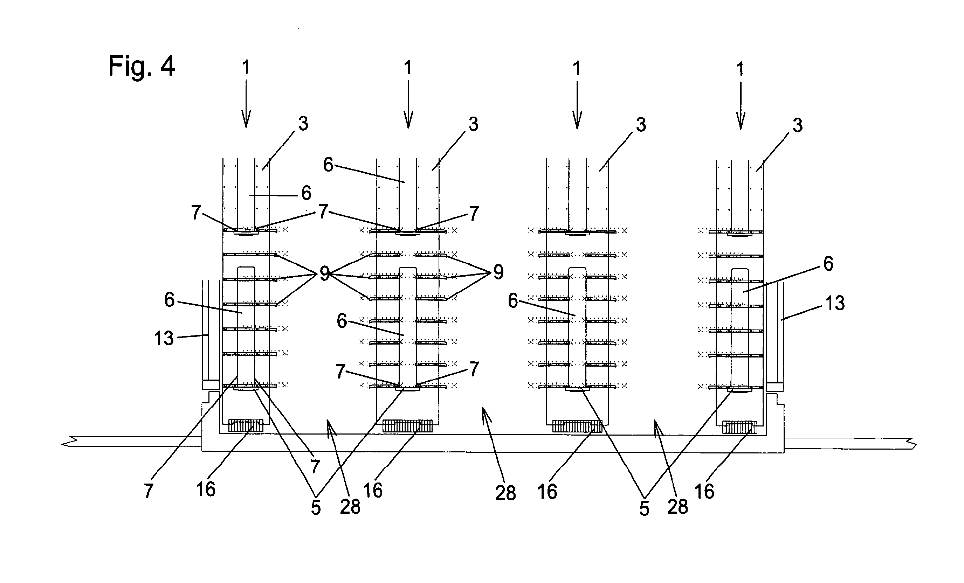

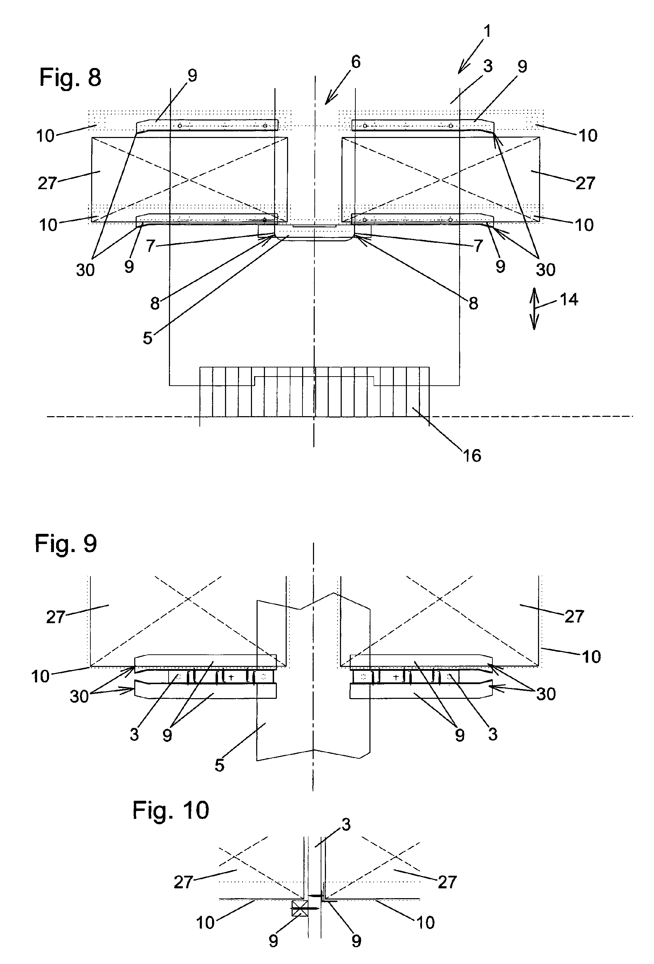

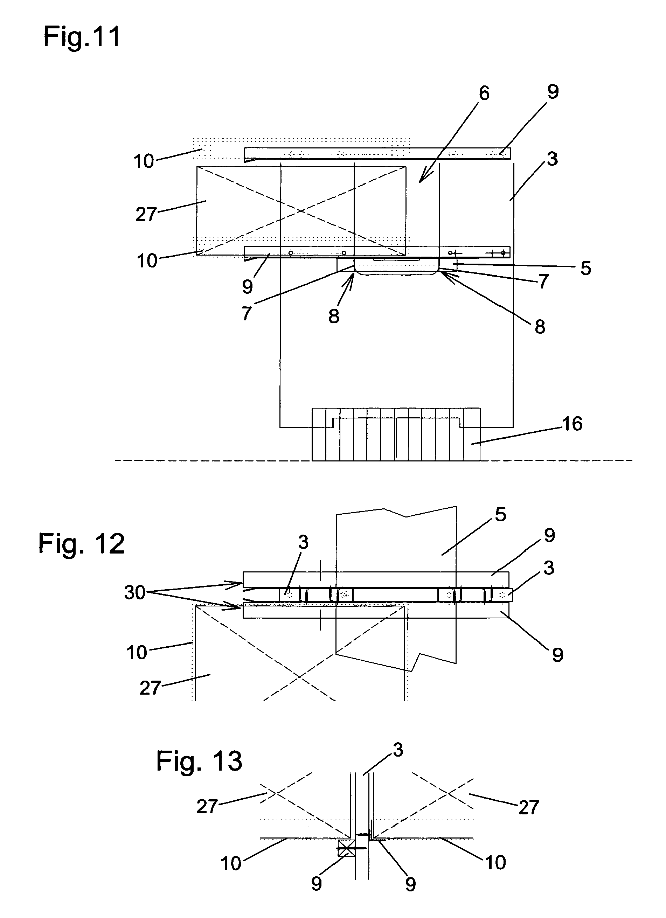

Im gezeigten Ausführungsbeispiel sind jedenfalls im jeweiligen Hochregal 1 Lagerschienen 9 vorgesehen, welche der Abstützung der Wannen 10 an den Stehern 3 und damit dem Hochregal 1 dienen. Es kann sich hier um einfache Metallschienen handeln, wie sie z.B. in den Fig. 8, 9, 11 und 12 sowie 10 und 13 zu erkennen sind. In den Fig. 10 und 13 sind auf der jeweils linken Seite Alternativen dargestellt. Hier sind die Lagerschienen 9 in Form von Leisten ausgebildet, welche mittels Verschraubung am jeweiligen Steher 3 befestigt werden. Die Anordnung der Lagerschienen ist beispielhaft in Fig. 4 sowohl für die am Rand angeordneten Hochregale 1 als auch für die mittig angeordneten Hochregale 1 gezeigt. Die mittig angeordneten Hochregale 1 tragen in jeder Höhe zwei voneinander getrennte Lagerschienen 9, sodass von beiden Seiten jeweils eine Wanne 10 eingeschoben werden kann. In den randlich angeordneten Hochregalen 1 sind im gezeigten Ausführungsbeispiel Lagerschienen 9 vorhanden, welche im Wesentlichen dazu dienen, dass eine Wanne 10 von der Gasse 28 aus eingeschoben und wieder entnommen werden kann.

Fig. 8 zeigt vergrößert einen unteren Bereich eines Stehers 3, an dem die hier im Querschnitt L-förmigen Lagerschienen 9 befestigt, vorzugsweise angeschraubt, sind. Gepunktet dargestellt sind die auf den Lagerschienen 9 angeordneten Wannen 10. Symbolisiert ist auch ein paketförmiger Gegenstand 27 in der Wanne 10 dargestellt. Die Wanne 10 kann natürlich auch dazu genutzt werden, dass direkt in ihr Kleinteile lose gelagert werden. Die etwas abgewinkelten vorderen Enden 30 der Lagerschienen 9 vereinfachen das Ein- und Ausführen der Wannen 10. Fig. 9 zeigt eine Draufsicht auf Lagerschienen 9 in Vertikalrichtung 14, wie sie beidseitig an einem Steher 3 angeordnet sind. Die Fig. 11 und 12 zeigen die analogen Darstellungen zu Fig. 8 und 9 für ein seitlich angeordnetes Hochregal 1.

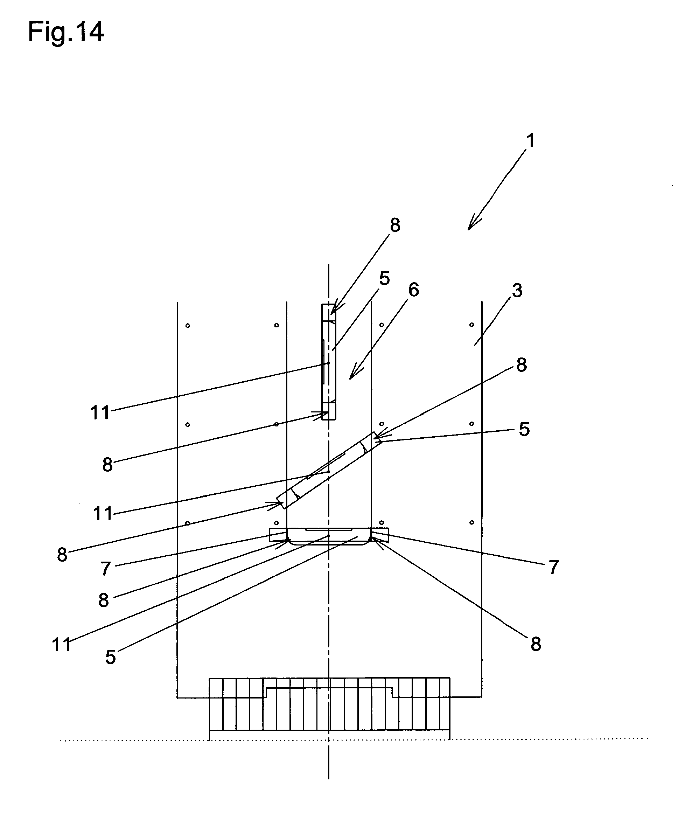

In Fig. 14 ist symbolisiert in einer Sequenz gezeigt, wie das bisher geschilderte Hochregal 1 montiert werden kann. Gezeigt ist ein Steher 3 und ein Längsträger 5 in drei unterschiedlichen Positionen. In der obersten Position wird der Längsträger 5 in die Ausnehmung 6 eingeführt bzw. durch diese hindurchgeführt. In der mittleren Position wird der Längsträger 5 um seine Längsachse 11 gedreht bzw. gekippt, so dass dann in der unten dargestellten fertig montierten Position der Längsträger 7 so angeordnet ist, dass zwei gegenüberliegende Wandabschnitte 7 des Stehers 3, welche die Ausnehmung 6 begrenzen, in die zwei einander gegenüberliegenden Nuten 8 im Längsträger 5 eingeführt sind.

Wie bereits eingangs ausgeführt, bestehen in bevorzugten Ausgestaltungsformen sowohl die Steher 3 als auch die Längsträger 5 bevorzugt aus Holz und/oder einem Holzverbundwerkstoff. Es wird hierzu auf die obigen Ausführungen verwiesen. Grundsätzlich können aber sowohl die Steher 3 als auch die Längsträger 5 auch aus anderen Materialien ausgebildet sein.

### Legende zu den Hinweisziffern:

- 1: Hochregal
- 2: Hochregallager
- 3: Steher
- 4: Horizontalrichtung
- 5: Längsträger
- 6: Ausnehmung
- 7: Wandabschnitt
- 8: Nut
- 9: Lagerschiene
- 10: Wanne
- 11: Längsachse
- 12: Dach
- 13: Außenwand
- 14: Vertikalrichtung
- 15: Vertikalerstreckung
- 16: Vorlegeschwelle
- 27: Gegenstand
- 28: Gasse
- 29: Mittenlängsachse
- 30: Ende
- 31: Randbereich

## Patentansprüche

1. Hochregal (1) für ein Hochregallager (2), insbesondere zur Lagerung einer Vielzahl von Kleinteilen, wobei das Hochregal (1) vertikal stehende Steher (3) und die Steher (3) in Horizontalrichtung (4) miteinander verbindende Längsträger (5) aufweist, **dadurch gekennzeichnet, dass** in den Stehern (3), vorzugsweise umfangsgeschlossene, Ausnehmungen (6) angeordnet sind und jeweils einer der Längsträger (5) durch jeweils eine der Ausnehmungen (6) in jeweils einem der Steher (3) hindurchgeführt ist und zumindest ein Wandabschnitt (7) des jeweiligen Stehers (3), welcher die jeweilige Ausnehmung (6) begrenzt, in zumindest eine Nut (8) im Längsträger (5) eingreift.

2. Hochregal (1) nach Anspruch 1, **dadurch gekennzeichnet, dass** die Steher (3) plattenförmig ausgebildet sind.

3. Hochregal (1) nach Anspruch 1 oder 2, **dadurch gekennzeichnet, dass** der Längsträger (5) zumindest zwei einander gegenüberliegende Nuten (8) aufweist, in die jeweils ein Wandabschnitt (7) des jeweiligen Stehers (3), welcher die jeweilige Ausnehmung (6) begrenzt, eingreift.

4. Hochregal (1) nach einem der Ansprüche 1 bis 3, **dadurch gekennzeichnet, dass** die Längsträger (5) brettförmig oder plattenförmig ausgebildet sind und/oder dass die Nut (8) bzw. die Nuten (8) in einem Randbereich (31) des Längsträgers (5) angeordnet ist bzw. sind.

5. Hochregal (1) nach einem der Ansprüche 1 bis 4, **dadurch gekennzeichnet, dass** die Ausnehmungen (6) in den Stehern (3) umfangsgeschlossen ausgebildet und/oder mittig angeordnet sind.

6. Hochregal (1) nach einem der Ansprüche 1 bis 5, **dadurch gekennzeichnet, dass** an den Stehern (3) Lagerschienen (9) zur Aufnahme von Wannen (10) für Kleinteile oder andere Gegenstände (27) angeordnet sind.

7. Hochregal (1) nach einem der Ansprüche 1 bis 6, **dadurch gekennzeichnet, dass** die Längsträger (5) und/oder die Steher (3) aus Holz und/oder Holz-Verbundwerkstoff, vorzugsweise aus Buchenfurnierschichtholz oder anderem Schichtholz, bestehen oder dieses zumindest aufweisen.

8. Verfahren zur Montage eines Hochregals (1) nach einem der Ansprüche 1 bis 7, **dadurch gekennzeichnet, dass** der jeweilige Längsträger (5) durch die jeweilige Ausnehmung (6) in dem jeweiligen Steher (3) hindurchgeführt wird und mittels Drehen oder Kippen des Längsträgers (5) um eine Längsachse (11) des Längsträgers (5) der zumindest eine Wandabschnitt (7) des Stehers (3), welcher diese Ausnehmung (6) begrenzt, in die zumindest eine Nut (8) im Längsträger (5) eingeführt wird.

9. Hochregallager (2) mit einer Vielzahl von Hochregalen (1) nach einem der Ansprüche 1 bis 7.

10. Hochregallager (2) nach Anspruch 9, **dadurch gekennzeichnet, dass** das Hochregallager (2) ein Gebäude ist, bei dem ein Dach (12) des Gebäudes und/oder Außenwände (13) des Gebäudes von Hochregalen (1) des Hochregallagers (2) getragen ist bzw. sind.
